# EUROPEAN PATENT SPECIFICATION

(11) **EP 3 538 435 B1**
(45) Date of publication and mention of the grant of the patent: **24.06.2020**
(21) Application number: 17805121.5
(22) Date of filing: 09.11.2017
(51) Int. Cl.: B64C 1/16, B64C 3/32, B64C 39/02, B64D 27/24, B64D 35/08

(54) **AIRCRAFT WITH ELECTRIC BATTERIES, IN PARTICULAR A HYBRID AIRCRAFT**
FLUGZEUG MIT ELEKTRISCHER BATTERIEN, INSBESONDERE EIN FLUGZEUG
AÉRONEF À BATTERIES ÉLECTRIQUES, EN PARTICULIER AÉRONEF HYBRIDE

(30) Priority: 14.11.2016 IT 201600114808
(43) Date of publication of application: 18.09.2019
(73) Proprietor: Politecnico di Milano, 20133 Milano (IT)
(72) Inventor: BERNASCONI, Andrea, 20831 Seregno (MB) (IT); BIONDANI, Fabio, 20067 Paullo (MI) (IT); CAPOFERRI, Luca, 24030 Brembate di Sopra (BG) (IT); FAVIER, Alberto, 25128 Brescia (IT); VELARDE LOPEZ DE AYALA, Carmen, 14011 Cordoba (ES); GUALDONI, Federico, 21040 Sumirago (VA) (IT); RIBOLDI, Carlo Emanuele Dionigi, 20900 Monza (MB) (IT); TRAINELLI, Lorenzo, 20037 Paderno Dugnano (MI) (IT)
(74) Representative: Zelioli, Giovanni
(86) International application number: PCT/EP2017/078728
(87) International publication number: WO 2018/087213

(56) References cited:
- EP-A1- 1 736 406
- DE-A1- 10 065 690
- FR-A1- 2 251 475
- US-A1- 2016 068 266
- US-B1- 8 967 529

## Description

### Technical field

The present invention relates to an aircraft comprising structural batteries, the energy of which is utilized on board of the aircraft also for propulsion by means of electric motors.

In general, the present invention finds application in the field of inhabited aircrafts, with electric or hybrid propulsion.

### Prior art

In the last 20-30 years, interest in the reduction of environmental pollution has grown exponentially. Even in the aeronautic field the regulations for emissions of motors have become increasingly stringent, and the attention of many research groups all over the world is focusing on designing aircrafts that are more concerned with environmental impact. Many programs financed by the EU, such as SESAR and AIRE, were conceived to study operative solutions adapted to reduce the emission of polluting agents.

As far as propulsion is concerned, although emissions have been drastically reduced in recent times, substitution of old technologies with newer ones, with zero environmental impact, still represents a fundamental challenge. In the last few years, remarkable progresses have been made in the field of electric propulsion. Performance of electric motors, as well as battery capacity, have considerably improved and are constantly evolving, thus boosting the progress towards aircrafts (so-called "more electric") increasingly focused on the use of electrical energy and allowing testing the first aircraft prototypes (so-called "all electric") using as energy source, electrical energy only.

However, energy storage systems do not yet allow performance levels similar to those of traditional systems based on fossil fuel, making it necessary to carry out an intense research activity.

Another key issue relative to the air transport is noise pollution. The increasing number of flights and proximity of some airports to residential areas cause serious problems to airway companies, which are often subjected to fines, and it is not uncommon that they are asked to reduce their activity, especially at night, because of acoustic problems. Even in particular cases of some aeroclubs and of a limited number of airports for which no acoustic certification is required, complaints from the community living near the airfield are often received.

In the light of the above, the electric propulsion can have a huge, double impact, both in the reduction of environmental pollution as well as in the reduction of noise pollution.

Moreover, introduction of electric motors allows for more advantages in terms of costs: for the same energy, indeed, the cost of production by means of electric systems is considerably lower with respect to that of a corresponding quantity of fossil fuel.

Finally, there is a greater reliability of electric motors with respect to thermal motors, thus reducing maintenance requirements and the overall costs linked to an entire life cycle of aircrafts.

Two of the main issues regarding electric propulsion are the relatively low battery autonomy in relation to the minimum autonomy required for general-aviation aircrafts, and the weight of the batteries which require a study of optimal positioning during the structural design step and which, when discharged of electric energy, become parasitic loads on the aircraft, useless from an operational standpoint.

The prior art comprises some solutions for housing batteries on board of electric propulsion aircrafts.

For example, US 8,967,529 (B1) relates to a battery positioned at least partially in the semi-wings of an aircraft; the aircraft includes a plurality of batteries that are inserted to fit in compartments obtained in the structural supports of the semi-wings.

However, in the solution offered by US 8,967,529 (B1), the batteries are limited to internal compartments of limited size, and therefore do not allow to store sufficient electrical energy to ensure flight autonomy to the aircraft in electric mode.

KR20160115864 (A) relates to a structure of an aircraft wing to which a battery is applied. The wing is made of a composite material; the upper surface is covered by solar panels, while the lower surface integrates a structural battery that allows storage of energy collected from the solar panels. The wing thus made allows to withstand a load applied to the aircraft while maintaining adequate mechanical resistance.

However, the solution of document KR20160115864 (A), while increasing the weight of the aircraft because of the batteries positioned on the wing, still does not achieve a sufficient electrical autonomy for flight of the aircraft. In addition, due to the limited electric capacity of the batteries, the solution of KR20160115864 (A) incurs the risk of resulting in an excessive increase of the wing's weight, impairing maneuverability of the aircraft and in general its performance and overall efficiency.

EP1736406(A1) relates to an airplane with an electric drive which comprises three sources of electrical energy: a battery, solar photo converters and constructional elements of an airplane, providing an electric current.

### Summary of the invention

One of the objects of the present invention is that of overcoming disadvantages of the prior art.

A particular object of the present invention is that of allowing to store on board of an aircraft sufficient electrical energy to ensure an adequate flying range.

A further particular object of the present invention is that of improving maneuverability of the aircraft and distribution of weights bound to the presence of batteries on board.

These and other objects are obtained by means of an aircraft as it results from the appended claims, that form an integral part of the present disclosure.

An idea at the basis of the present invention is to provide an aircraft comprising: a fuselage comprising a plurality of panels adapted to define an aerodynamic shape for a cockpit or cargo hold of the aircraft; at least one wing structurally connected to the fuselage and adapted to allow flying of the aircraft, wherein the wing comprises a plurality of wing surfaces and at least a frame configured to support the wing surfaces; a propulsion system comprising: at least one electric motor, and batteries adapted to store electrical energy to supply the electric motor. Preferably, the batteries can also be used for supplying any onboard system if present.

The batteries comprise first structural batteries which constitute at least one surface of the wing surfaces; furthermore, the batteries comprise structural batteries that constitute at least one fuselage panel.

Advantageously, the particular distribution of structural batteries in the aircraft according to the present invention allows improving performance and overall efficiency.

In particular, the structural batteries comprise composite multi-functional materials adapted at the same time to withstand mechanical loads and to store and transfer electrical energy.

Preferably, the present invention provides for use of structural batteries on most of the aircraft structure, comprising in particular a predominant portion of the fixed wing portion of the wing surface and almost all of the fuselage surface.

In a preferred embodiment, the surfaces corresponding to moving surfaces of the wing and to the aircraft tail section, are not provided with structural batteries, to avoid electrical coupling problems that in fact may affect the overall operation of the aircraft.

Additionally, in an even more preferred embodiment, it is thought to exclude structural batteries from surfaces corresponding to the upper wing, as these surfaces are predominantly subject to compression stresses, which are hardly supported by certain types of structural batteries.

In principle, it is possible to provide an aircraft structure almost entirely made up of structural batteries, thus maximizing the amount of energy that can be stored on the aircraft.

The present invention employs structural batteries which comprise a multifunctional structure, capable at the same time of assisting in its mechanical function of withstanding the structural loads to which the aircraft is subject, and of storing and distributing energy thereby providing a battery function.

Thereby, once the batteries' charge is over, their own structure continues to play an active role in structurally supporting the aircraft, without having to transport additional weights which are useless for the operation of the aircraft.

The materials preferably used for structural batteries are of a composite type, similar to carbon-reinforced materials, which can further transfer ions, for example Lithium-ions, as a conventional battery. Such multifunctional materials therefore become a "structural battery" in the sense of the present invention.

In a preferred embodiment, the structural batteries preferably have a sandwich structure.

Further features and advantages will become apparent from the detailed, non-limitative description hereafter of a preferred embodiment of the present invention, and from the dependent claims which outline preferred and particularly advantageous embodiments of the invention.

### Brief description of the drawings

The invention is illustrated with reference to the following figures, provided as non-limiting examples, wherein:
- Figure 1 shows a first view of a preferred embodiment of an aircraft according to the present invention.
- Figure 2 shows a second view of a preferred embodiment of an aircraft according to the present invention.
- Figure 3 shows a first section of a preferred embodiment of a wing of an aircraft according to the present invention.
- Figure 4 shows a second section of a preferred embodiment of a wing of an aircraft according to the present invention.
- Figure 5 shows a third section of a preferred embodiment of a wing of an aircraft according to the present invention.
- Figure 6 shows a section of a preferred embodiment of a fuselage in an aircraft according to the present invention.
- Figure 7 exemplifies the structure of a preferred embodiment of an aircraft according to the present invention.
- Figure 8 shows in detail the leading edge of a preferred embodiment of a wing in an aircraft according to the present invention.

In the different figures, analogous elements will be identified by analogous reference numbers.

### Detailed description

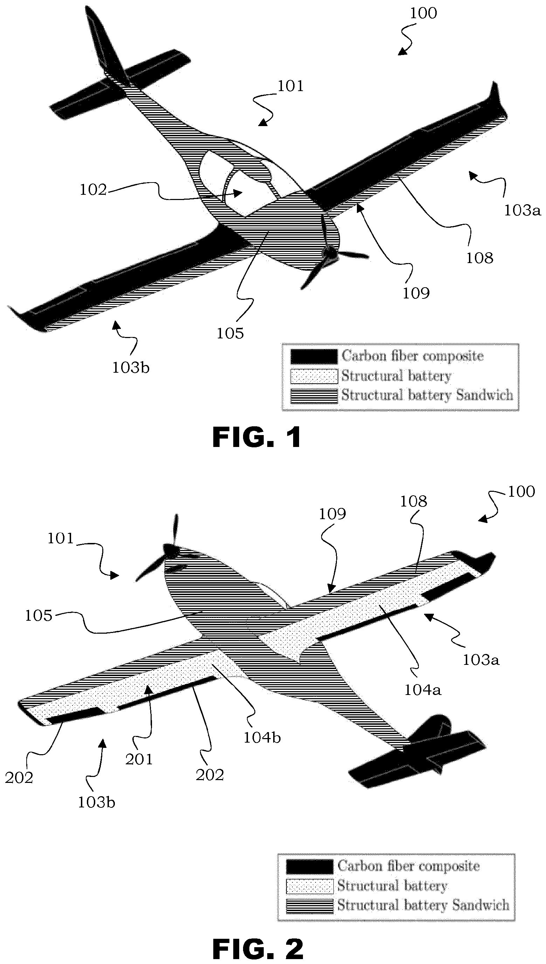

Figures 1 and 2 show respectively an upper and a lower view of an aircraft 100 according to the present invention.

The aircraft 100 comprises a fuselage 101 comprising a plurality of panels adapted to define an aerodynamic shape for a cockpit 102 of the aircraft 100. Alternatively, or in addition, the aircraft can host a cargo hold for the transport of payload. In particular, the aircraft can be of a kind piloted by a human operator, as well as of an autopiloted or remotely-piloted kind.

The fuselage 101 preferably presents a configuration so-called "tadpole-like", characterising most of the aircrafts belonging to the general aviation category. This configuration presents a wetted surface reduced of 30-40% with respect to other configurations. The production of such fuselages is normally more expensive than other configurations, but allows to obtain remarkable savings in case of adoption of composite materials, in particular by using structural batteries, as will be better shown below.

It is however possible to use different configurations for the fuselage, such as the so-called "trunk" fuselage or others.

The aircraft 100 comprises at least a wing 103, in particular two semi-wings 103a and 103b, structurally connected to the fuselage 101 and adapted to allow flying of the aircraft 100.

The wing 103 comprises a plurality of wing surfaces and at least a frame (not visible) configured to support the wing surfaces.

The aircraft further comprises a propulsion system (not visible), which comprises at least one electric motor, and batteries adapted to store electrical energy to supply the electric motor, and moreover to optionally supply the on-board equipment. Such batteries will be further described below.

The presented embodiment refers to an aircraft 100 of the 4-seat kind for general aviation. Preferably, the aircraft 100 has a maximum take-off weight comprised between 1000 kg and 2000 kg. In a most preferred embodiment, the aircraft 100 has a maximum take-off weight of about 1265 kg. The cockpit of said aircraft 100 is configured to host at least one passenger, preferably four passengers.

However, the aircraft 100 merely represents an example and not a limitation, being it possible to use the invention for aircrafts of any desired size for civilian as well as military applications.

The batteries comprise first structural batteries that constitute at least a surface 104a and 104b of the wing surfaces, indicated in the legend as "Structural Battery".

Moreover, the batteries comprise second structural batteries that constitute at least one panel 105 of the fuselage, indicated in the legend as "Structural Battery Sandwich".

The design of an aircraft structure partially constituted by structural batteries has different purposes with respect to that of a conventional aircraft structure: while the main objective of a traditional design is to create a structure that withstands loads generated by any flying condition with the least possible weight, the purpose of the design of an aircraft structure having structural batteries according to the present invention, is to withstand loads and provide the required power and energy, while minimizing the overall weight of the structure and of the battery pack.

From the mechanical point of view, structural batteries have good although not optimal characteristics, because while tensile strength is comparable to that of composites currently in use, the same cannot be said for the compressive strength, limited by the characteristics of the matrix. In particular, an evolution is expected within a short time to reach a stiffness value of about 500 MPa, still far from the 5 GPa of a conventional epoxy matrix. This is, from a structural point of view, one of the focal points of structural batteries on which the research is currently focusing.

From a global point of view, already with the electrical and mechanical characteristics of the current structural barriers, there are advantages in terms of reduction of the overall weight, of the operational costs and of noise and environmental pollution of the aircraft, that overcome disadvantages in terms of electrical and mechanical performances which are anyway in predictable evolution and improvement.

The wing 103 comprises fixed wing surfaces 201 and movable wing surfaces 202. The movable wing surfaces 202 are configured for the manoeuvre of the aircraft 100 during flight and are preferably realized free of batteries, in order to avoid electrical connections problems. Structural batteries preferably constitute only part of the fixed wing surfaces 201, while the movable wing surfaces 202 are free of structural batteries.

Preferably, structural batteries in at least a panel 105 and in at least a wing surface 108 adjacent to a leading edge 109 of the wing, are provided in a sandwich structure.

The sandwich structure preferably comprises a core and further comprises a first skin and a second skin. The first skin and the second skin are laminar and applied respectively on planar surfaces opposite to the core. The first skin and the second skin consist of structural batteries, which incorporate the core.

The sandwich structure is thus preferably configured in a sandwich-like manner, with the core comprising a honeycomb-structure adapted to improve stiffness and resistance to shear stresses of the sandwich structure, while the skins constituted by structural barriers are adapted to resist to loads which act in the plane of the wing and to bending moments which act outside of the plane of the wing.

The material used for the honeycomb-structured core of the sandwich panel is preferably a meta-aramid based material, which allows to prevent or delay the propagation of a fire in case it occurred on board of the aircraft.

It is furthermore possible to use different materials for the honeycomb-structured core, and it is also possible to use cores of different nature, such as foams.

In a preferred embodiment, the structural batteries of the panels 105 of the fuselage 101 involve at least the 80% of the surface of the fuselage 101.

Alternatively, as far as the surfaces 108 adjacent to the leading edge 109 are concerned, it is possible to use traditional panels reinforced with carbon-fibre.

In order to prevent propagation of fires and to protect the passengers, steel bulkheads can be provided within the fuselage 101 to protect the cockpit.

The final combination of those materials allows to obtain the minimal structural weight and the minimal quantity of structural batteries in relation to the propulsion system. The present embodiment is nevertheless an example and not a limitation of the adoptable materials.

The materials used in the present embodiment are a generic Carbon Fiber Reinforced Polymer (CFRP) and stainless steel, as well as structural batteries. As an alternative to CFRP it is possible to use different materials such as, for example, Glass Fiber Reinforced Polymers (GFRP), which present lower mechanical characteristics but also a lower cost.

In a preferred embodiment, it was preferred to opt for the solution comprising CFRP rather than for the one comprising GFRP, not only because of its better mechanical characteristics, but also for its cost tending to a continuous lowering, thus reducing the advantage presented by the GFRP, and for the greater adoption and thus experimentation already performed on a number of aircrafts as an alternative to the traditional aluminum alloy. Particularly among the CFRPs, polyacrylonitrile products were selected, given the higher capacity of Lithium-ion storage among all carbon fiber reinforced polymers. Instead, a generic stainless steel was used for the fuselage.

In a preferred embodiment, the propulsion system comprises, in addition to the electric motor, at least one thermal motor, preferably of the diesel type, associated with the one electric motor to produce a hybrid propulsion system. It is clearly possible to contemplate other types of thermal motor.

The thermal motor is preferably connected in series and/or in parallel with the electric motor, thus allowing to have a flying range comparable with aircrafts using a traditional propulsion. However, also in this case, this is just an example and not a limitation, being it already possible with the current technology to use the vehicle in an "all-electric" configuration as a motor glider, a sailplane, etc.

Moreover, mono-motor or multi-motor configurations are possible both for the electric and the thermal motor.

Furthermore, at least one battery of the traditional type may be present, used as reserve in case of an emergency and of incorrect functioning of the structural batteries. Clearly, this solution will result merely optional, once optimization of structural batteries will be obtained.

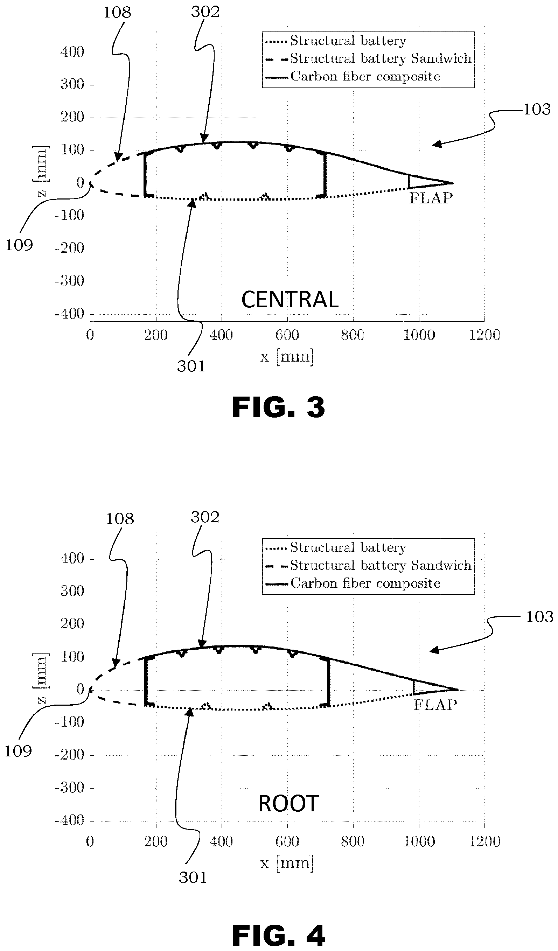

Figures 3, 4 and 5 show respectively a section at the root of the wing 103, a section at the middle of the wing 103 and a section at the tip of the wing 103, according to the present invention.

The at least one wing 103 comprises, as said, a leading edge 109; the wing surfaces 108 adjacent to said leading edge 109 comprise the sandwich structure of structural batteries.

Moreover, the wing 103 comprises lower wing surfaces 301 and upper wing surfaces 302. Preferably, the structural batteries constitute the lower wing surfaces 301. As far as the upper wing surfaces 302 in the present embodiment are concerned, instead, it is preferably not considered to adopt structural batteries, in order to provide a better mechanical resistance to the wing 103 during flight of the aircraft 100. Indeed, the upper surfaces 302 are more subjected to compression stresses, which are worse supported by structural batteries.

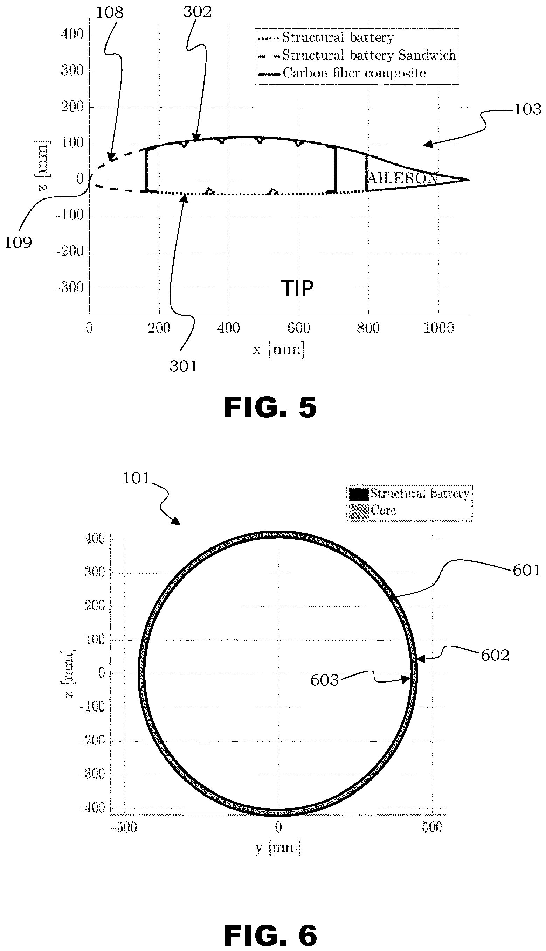

Figure 6 shows a section of the fuselage 101 of the aircraft 100.

It is possible to observe how the structure of the fuselage 101 is constituted by a sandwich structure of structural batteries. Such sandwich structure comprises a laminar core 601, preferably with a reinforced shaped structure of the kind with hexagonal cells. This choice is due to the properties of layered structures, in particular of the sandwich-like structures, which allow a thickening of the structure and thus a higher stiffness of the same, with no excessive extra weight. In fact, the weight of the core 601 is much lower than that of the skins 602 and 603. The skins 603 and 604, respectively internal and external to the fuselage 101, comprise the structural batteries.

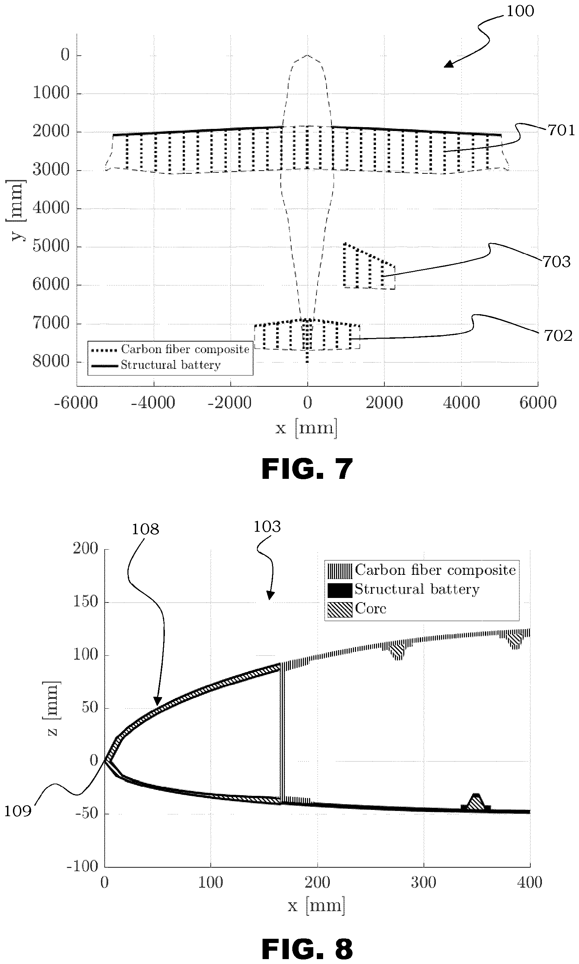

Figure 7 exemplifies the aircraft structure according to a variant of the present invention. In particular, the ribs 701 of the wing 103 and the structure of the tail sections 702 and 703 are shown. These are preferably made of carbon-fibre reinforced composite material, to provide better mechanical characteristics while at the same time ensuring a non-excessive weight in line with the intended purpose for the present invention. In this variant, the structural batteries on the leading edge are not included in the already described sandwich structure, but are simply integrated into the structure by providing an alternative embodiment.

Figure 8 shows in detail the surfaces at the leading edge 109 of the wing 103.

As already described, the wing surfaces 108 adjacent to the leading edge 109 comprise a sandwich structure. It was preferred to adopt this type of configuration for the section of the wing section 103 proximal to the leading edge 109, to provide the greatest rigidity possible in order to ensure perfect maintenance of the aerodynamic shape, thus preserving the aerodynamic characteristics of the profile of the wing 103. Additionally, as with the fuselage, this kind of solution with structural batteries with a sandwich structure ensures that increase in rigidity is not aggravated by a consequent increase in weight.

### Industrial applicability

Advantageously, the present invention provides for a reduction in the overall weight of the aircraft for the same amount of energy stored. With reference to the maximum take-off weight, there is a 1.5% reduction compared to an aircraft made with traditional composite materials and using traditional Lithium-ion batteries, and a reduction of 6% compared to an aircraft realized with a structure made of aluminum alloy and using traditional Lithium-ion batteries.

Additionally, there is an estimated 20% reduction in aircraft operating costs, including energy expenditure and maintenance costs, compared to modern general aviation aircrafts.

It has been calculated that, in one embodiment, the aircraft would be able to cover, using only electricity from the batteries fully charged before flight, a distance of approximately 100 km comprising take-off, climb, cruise, descent and landing. In this calculation, mission energy has been taken as 90% of the total energy stored in the battery, considering the remaining 10% as an emergency reserve.

Advantageously, a significant reduction of noise emissions and environmental pollution is achieved with respect to modern general aviation aircrafts.

Considering the description herein provided, the skilled in the art may provide further modifications and variations to meet contingent and specific requirements.

The embodiments described herein are therefore intended to be illustrative and non-limiting examples of the invention.

## Claims

1. Aircraft (100) comprising:
a fuselage (101) comprising a plurality of panels (105) adapted to define an aerodynamic shape for a cockpit or a cargo hold of said aircraft (100);
at least one wing (103) structurally connected to said fuselage (101) and adapted to allow flying of said aircraft (100), said at least one wing (103) comprising a plurality of wing surfaces and at least a frame configured to support said wing surfaces;
a propulsion system for said aircraft (100), said propulsion system comprising:
at least one electric motor, and
batteries adapted to store electrical energy to supply said at least electric motor,
wherein said batteries comprise first structural batteries which constitute at least one surface (104a, 104b) of said wing surfaces;
**characterised in that**
said batteries further comprise second structural batteries which constitute at least one panel (105) of said plurality of panels (105) of said fuselage (101).

2. Aircraft according to claim 1, wherein said first structural batteries and said second structural batteries comprise multi-functional composite materials adapted at the same time to withstand mechanical loads and to store and transfer electrical energy.

3. Aircraft according to claim 1 or 2, comprising structural batteries integrated in a sandwich structure (108, 601, 602, 603), said sandwich structure (108, 601, 602, 603) comprising a core (601), and further comprising a first skin (602) and a second skin (603), said first skin (602) and said second skin (603) being laminar and applied respectively on opposite planar surfaces of said core (601), wherein said first skin (602) and said second skin (603) are constituted of structural batteries.

4. Aircraft according to claim 3, wherein said at least one panel (105) comprises said sandwich structure (601, 602, 603).

5. Aircraft according to claim 3 or 4, wherein said at least one wing comprises a leading edge (109), and wherein wing surfaces (108) adjacent to said leading edge (109) comprise said sandwich structure (108).

6. Aircraft according to any one of claims 3 to 5, wherein said core (601) comprises a reinforced shaped structure, preferably a hexagonal cells structure.

7. Aircraft according to any one of claims 1 to 6, wherein said at least one wing (103) comprises lower wing surfaces (301) and upper wing surfaces (302), wherein said structural batteries constitute at least one surface of said lower wing surfaces (301),
said upper wing surfaces (302) being substantially realised free of said structural batteries, to provide higher mechanical strength to said at least one wing (103) during flight of said aircraft (100).

8. Aircraft according to any one of claims 1 to 7, wherein said at least one wing (103) comprises fixed wing surfaces (201) and movable wing surfaces (202), said movable wing surfaces (202) being configured for the manoeuvre of said aircraft (100) during flight of said aircraft (100), and wherein said movable wing surfaces (202) are realised free of said structural batteries.

9. Aircraft according to any one of claims 1 to 8, wherein said second structural batteries constitute said panels (105) of said fuselage (101) involving at least 80% of surface of said fuselage (101).

10. Aircraft according to any one of claims 1 to 9, wherein said propulsion system further comprises at least one thermal motor, said thermal motor being associated with said at least one electric motor to realise a hybrid propulsion system.

11. Aircraft according to any one of claims 1 to 10, wherein said cockpit is configured to accommodate at least one passenger, preferably four passengers.

12. Aircraft according to any one of claims 1 to 11, wherein said propulsion system includes a propeller.

13. Aircraft according to any one of claims 1 to 12, having a maximum take-off weight comprised between 1000 kg and 2000 kg.

## Patentansprüche

1. Flugzeug (100), das umfasst:
einen Rumpf (101), der eine Vielzahl von Paneelen (105) umfasst, die dafür geeignet sind, eine aerodynamische Form für ein Cockpit oder einen Frachtraum des Flugzeugs (100) festzulegen;
mindestens einen Flügel (103), der mit dem Rumpf (101) strukturell verbunden und dafür geeignet ist, das Flugzeug (100) fliegen zu lassen, wobei der mindestens eine Flügel (103) eine Vielzahl von Flügeloberflächen und mindestens einen Rahmen umfasst, der gestaltet ist, um die Flügeloberflächen abzustützen;
ein Antriebssystem für das Flugzeug (100), wobei das Antriebssystem umfasst:
mindestens einen Elektromotor, und
Batterien, die dafür geeignet sind, elektrische Energie zu speichern, um den mindestens einen Elektromotor zu beliefern,
wobei die Batterien erste strukturelle Batterien umfassen, die mindestens eine Oberfläche (104a, 104b) der Flügeloberflächen bilden;
**dadurch gekennzeichnet dass**
die Batterien ferner zweite strukturelle Batterien umfassen, die mindestens ein Paneel (105) der Vielzahl von Paneelen (105) des Rumpfes (101) bilden.

2. Flugzeug nach Anspruch 1, bei dem die ersten strukturellen Batterien und die zweiten strukturellen Batterien multifunktionale Verbundwerkstoffe umfassen, die dafür geeignet sind, gleichzeitig mechanischen Belastungen zu widerstehen und elektrische Energie zu speichern und weiterzuleiten.

3. Flugzeug nach Anspruch 1 oder 2, das strukturelle Batterien umfasst, die in eine Sandwichstruktur (108, 601, 602, 603) integriert sind, wobei die Sandwichstruktur ((108, 601, 602, 603) einen Kern (601) umfasst und ferner eine erste Haut (602) und eine zweite Haut (603) umfasst, wobei die erste Haut (602) und die zweite Haut (603) laminar sind und jeweils auf entgegengesetzten ebenen Oberflächen des Kerns (601) aufgebracht sind, wobei die erste Haut (602) und die zweite Haut (603) aus strukturellen Batterien bestehen.

4. Flugzeug nach Anspruch 3, bei dem das mindestens eine Paneel (105) die Sandwichstruktur (601, 602, 603) umfasst.

5. Flugzeug nach Anspruch 3 oder 4, bei dem der mindestens eine Flügel eine Vorderkante (109) umfasst, und bei dem an die Vorderkante (109) angrenzende Flügeloberflächen (108) die Sandwichstruktur (108) umfassen.

6. Flugzeug nach einem der Ansprüche 3 bis 5, bei dem der Kern (601) eine verstärkte geformte Struktur, vorzugsweise eine hexagonale Zellenstruktur, umfasst.

7. Flugzeug nach einem der Ansprüche 1 bis 6, bei dem der mindestens eine Flügel (103) untere Flügeloberflächen (301) und obere Flügel Oberflächen (302) umfasst, wobei die strukturellen Batterien mindestens eine Oberfläche der unteren Flügeloberflächen (301) bilden,
wobei die oberen Flügeloberflächen (302) im Wesentlichen frei von den strukturellen Batterien verwirklicht sind, um dem mindestens einen Flügel (103) eine größere mechanische Festigkeit während des Fluges des Flugzeugs (100) zu geben.

8. Flugzeug nach einem der Ansprüche 1 bis 7, bei dem der mindestens eine Flügel (103) feststehende Flügeloberflächen (201) und bewegliche Flügeloberflächen (202) umfasst, wobei die beweglichen Flügeloberflächen (202) zum Manövrieren des Flugzeugs (100) während des Fluges des Flugzeugs (100) gestaltet sind, und bei dem die beweglichen Flügel Oberflächen (202) frei von den strukturellen Batterien verwirklicht sind.

9. Flugzeug nach einem der Ansprüche 1 bis 8, bei dem die zweiten strukturellen Batterien die Paneele (105) des Rumpfes (101) bilden, wobei sie mindestens 80% der Oberfläche des Rumpfes (101) ausmachen.

10. Flugzeug nach einem der Ansprüche 1 bis 9, bei dem das Antriebssystem ferner mindestens einen thermischen Motor umfasst, wobei der thermische Motor mit dem mindestens einen Elektromotor verbunden ist, um ein Hybridantriebssystem zu verwirklichen.

11. Flugzeug nach einem der Ansprüche 1 bis 10, bei dem das Cockpit gestaltet ist, um mindestens einen Passagier, vorzugsweise vier Passagiere, aufzunehmen.

12. Flugzeug nach einem der Ansprüche 1 bis 11, bei dem das Antriebssystem einen Propeller enthält.

13. Flugzeug nach einem der Ansprüche 1 bis 12, das ein maximales Startgewicht zwischen 1000 kg und 2000 kg hat.

## Revendications

1. Aéronef (100) comprenant :
un fuselage (101) comprenant une pluralité de panneaux (105) adaptés pour définir une forme aérodynamique pour un poste de pilotage ou une soute à fret dudit aéronef (100) ;
au moins une aile (103) raccordée structurellement audit fuselage (101) et adaptée pour permettre audit aéronef (100) de voler, ladite aile (103), au moins au nombre de une, comprenant une pluralité de surfaces d'aile et au moins un châssis configuré pour supporter lesdites surfaces d'aile ;
un système de propulsion dudit aéronef (100), ledit système de propulsion comprenant :
au moins un moteur électrique, et
des batteries adaptées pour stocker de l'énergie électrique pour alimenter ledit moteur électrique, au moins au nombre de un,
dans lequel lesdites batteries comprennent des premières batteries structurelles qui constituent au moins une surface (104a, 104b) desdites surfaces d'aile ;
**caractérisé en ce que**
lesdites batteries comprennent en outre des secondes batteries structurelles qui constituent au moins un panneau (105) de ladite pluralité de panneaux (105) dudit fuselage (101).

2. Aéronef selon la revendication 1, dans lequel lesdites premières batteries structurelles et lesdites secondes batteries structurelles comprennent des matériaux composites multifonctionnels adaptés en même temps pour supporter des charges mécaniques et pour stocker et transférer de l'énergie électrique.

3. Aéronef selon la revendication 1 ou 2, comprenant des batteries structurelles intégrées dans une structure en sandwich (108, 601, 602, 603), ladite structure en sandwich (108, 601, 602, 603) comprenant une âme (601), et comprenant en outre une première peau (602) et une seconde peau (603), ladite première peau (602) et ladite seconde peau (603) étant stratifiées et appliquées respectivement sur des surfaces planes opposées de ladite âme (601), ladite première peau (602) et ladite seconde peau (603) étant constituées de batteries structurelles.

4. Aéronef selon la revendication 3, dans lequel ledit panneau (105), au moins au nombre de un, comprend ladite structure sandwich (601, 602, 603).

5. Aéronef selon la revendication 3 ou 4, dans lequel ladite aile, au moins au nombre de une, comprend un bord d'attaque (109), et dans lequel les surfaces d'aile (108) adjacentes audit bord d'attaque (109) comprennent ladite structure en sandwich (108).

6. Aéronef selon l'une quelconque des revendications 3 à 5, dans lequel ladite âme (601) comprend une structure mise en forme renforcée, de préférence une structure à cellules hexagonales.

7. Aéronef selon l'une quelconque des revendications 1 à 6, dans lequel ladite aile (103), au moins au nombre de une, comprend des surfaces d'aile inférieures (301) et des surfaces d'aile supérieures (302), dans lequel lesdites batteries structurelles constituent au moins une surface desdites surfaces d'aile inférieures (301),
lesdites surfaces d'aile supérieures (302) étant sensiblement réalisées sans lesdites batteries structurelles, afin de fournir une résistance mécanique plus élevée à ladite aile (103), au moins au nombre de une, pendant le vol dudit aéronef (100).

8. Aéronef selon l'une quelconque des revendications 1 à 7, dans lequel ladite aile (103), au moins au nombre de une, comprend des surfaces d'aile fixes (201) et des surfaces d'aile mobiles (202), lesdites surfaces d'aile mobiles (202) étant configurées pour la manœuvre dudit aéronef (100) pendant le vol dudit aéronef (100), et dans lequel lesdites surfaces d'aile mobiles (202) sont réalisées sans lesdites batteries structurelles.

9. Aéronef selon l'une quelconque des revendications 1 à 8, dans lequel lesdites secondes batteries structurelles constituent lesdits panneaux (105) dudit fuselage (101) en impliquant au moins 80 % de la surface dudit fuselage (101).

10. Aéronef selon l'une quelconque des revendications 1 à 9, dans lequel ledit système de propulsion comprend en outre au moins un moteur thermique, ledit moteur thermique étant associé audit moteur électrique, au moins au nombre de un, pour réaliser un système de propulsion hybride.

11. Aéronef selon l'une quelconque des revendications 1 à 10, dans lequel ledit poste de pilotage est configuré pour loger au moins un passager, de préférence quatre passagers.

12. Aéronef selon l'une quelconque des revendications 1 à 11, dans lequel ledit système de propulsion comporte une hélice.

13. Aéronef selon l'une quelconque des revendications 1 à 12, ayant une masse au décollage maximale comprise entre 1000 kg et 2000 kg.
